Europäisches Patentamt

European Patent Office

Office européen des brevets

(11) Veröffentlichungsnummer: **0 001 764**
B1

(12) **EUROPÄISCHE PATENTSCHRIFT**

(21) Anmeldenummer: **78101111.9**

(22) Anmeldetag: **10.10.78**

(51) Int. Cl³: **B 23 B 27/16, B 23 C 5/22**

(54) Klemmhalter für Wendeschneidplatten

(30) Priorität: **12.10.77 AT 7277/77**

(43) Veröffentlichungstag der Anmeldung:
**16.05.79 Patentblatt 79/10**

(45) Bekanntmachung des Hinweises auf die Patenterteilung:
**23.07.80 Patentblatt 80/15**

(84) Benannte Vertragsstaaten:
**BE CH DE FR GB NL SE**

(56) Entgegenhaltungen:
AT - B - 292 411
CH - A - 447 767
DD - A - 107 222
DE - B - 1 949 794
DE - B - 2 402 971

(73) Patentinhaber: **Metallwerk Plansee Gesellschaft MBH**
**Siebenbürgerstrasse 23**
**D - 8923 Lechbruck (DE)**

(72) Erfinder: **Maier, Johann**
**Kindergartenstrasse 16**
**A - 6600 Reutte - Mühl (AT)**

Courier Press, Leamington Spa, England.

## Klemmhalter für Wendeschneidplatten

Die Erfindung betrifft einen Werkzeug-Klemmhalter, welcher einen Schaft mit einer Ausnehmung zur Auflage einer gelochten Unterlagsplatte und einer gelochten Wendeschneidplatte sowie eine Klemmeinrichtung aufweist, die eine in einer Schaftbohrung unter der Ausnehmung beferstigte zylindrische Hülse mit einem Ringbund an ihrem oberen Ende sowie ein Klemmelement umfaßt, das mit seinem Fußteil in die Hülse und mit seinem Kopfteil durch die Underlagsplatte hindurch in das Loch der Wendeschneidplatte hineinragt und dort abgestützt ist und das in der Hülse mittels Tellerfedern gehalten und gegen Federkraft in Achsrichtung bewegbar ist.

Es ist eine Vielzahl von Klemmsystemen bekannt, wonach in einer Schaftausnehmung gelagerte Mittelloch-Wendeschneidplatten mittels eines in das Mittelloch hineinragenden Klemmorganes gegen eine oder mehrere Seitenwände der Schaftausnehmung geklemmt sind. Die Plattenklemmung erfolgt beispielsweise über das Drehen eines Exzenter-Bolzens bzw. eines aus mehreren gegeneinander bewegbaren Teilen bestehenden Bolzensystems. Bei anderen Halterausführungen erfolgt die Klemmung der Wendeschneidplatte über ein Kippen des Bolzens, beispielsweise mittels eines Kniehebelsystemes.

Nach derartigen Systemen arbeitende Klemmwerkzeuge besitzen bekanntermaßen eine Reihe von Nachteilen, so die Halter mit Exzenter-Bolzen vor allem der Nachteil großer Bauhöhe, des Erfordernisscs hoher Präsizion sowie der Gefahr der Verschmutzung und des Verlegens der Sechskantöffnung im Bolzen. Halter mit Kniehebel sind teuer in der Fertigung und erfordern große Bauabmessungen, um eine ausreichende Drei-Punkt-Hebelwirkung zu gewährleisten.

Es ist bekannt, daß die Klemmung einer Wendeschneidplatte sehr stark von dem durch das Bedienungspersonal angelegten Drehmoment abhängt. Bei Mittellochklemmungen mit Exzenterstift der üblichen Bauart wirkt sich diese Tatsache dadurch besonders nachteilig aus, daß je nach angelegtem Drehmoment die Endstellung des Exzenters unterschiedlich ist und damit die Klemmung häufig nicht in der vorherbestimmten Richtung erfolgt.

In der Vergangenheit wurden bereits Klemmsysteme mit Tellerfedern vorbeschrieben, die eine bedienungsunabhängige Klemmung ermöglichen. Nach einer solchen Ausführung wird in eine Bohrung im Schaft unter der Wendeplatte eine Hülse eingeschraubt. Im Inneren dieser Hülse befindet sich ein Bolzen, der mittels Tellerfedern gegen die Lage der Hülse in Achrichtung spannbar ist. Die Klemmung der Wendeschneidplatte erfolgt über den Mittellochbolzen nach dem Hebelprinzip, wobei der Mittellochbolzen über einen Punkt an der Innenwandung des Mittelloches und über zwei Punkte an der eingeschraubten Hülse anliegt. Für dieses Klemmsystem lassen sich in der Praxis die vorbestimmten Anlagepunkte des Klemmbolzens nicht ausreichend sicher gewährleisten, so daß eine exakte Klemmung der Wendeschneidplatte häufig nicht sichergestellt ist. Zudem ist die gesamte Bauhöhe vergleichsweise groß, da die Bereiche der Drei-Punkt-Abstützung und des Federsitzes räumlich übereinander liegen.

Gemessen am Stand der Technik hat demnach die vorliegende Erfindung die Aufgabe, ein Klemmhaltersystem zu schaffen, das konstruktiv einfach und daher vergleichsweise billig in der Fertigung ist. Das Klemmsystem soll sich zur Klemmung von Wendeschneidplatten sowohl in Drehwerkzeugen als auch im Fräserträgerkörper eignen. Infolge des räumlich engen Beieinanderliegens der Anlagepunkte des Klemmsystems sollen unvermeidliche Dimensiontoleranzen sowohl des eigentlichen Klemmorganes als auch der Ausnehmungen und Bohrungen im Trägerkörper und schließlich auch der Wendeschneidplatten höchstens noch einen untergeordneten Einfluß auf die tatsächliche Klemmung einer Wendeschneidplatte im Einzelfall haben. Die Güte der Klemmung soll gemäß der Aufgabe praktisch nur noch von der Fertigungsgenauigkeit des Klemmorganes selbst bestimmt sein. Die Mittellochklemmung soll bedienungsunabhängig mit stets gleicher Klemmkraft erfolgen. Das Klemmorgan soll sowohl Halterausführungen für negative als auch für positive Wendeplatten ermöglichen. Durch eine geringe Bauhöhe des Klemmorganes sollte sich dieses auch für Halter mit kleinen Schaftabmessungen, zum Beispiel für das Innenkopierdrehen, verwenden lassen. Die Klemmung muß ausreichend zuverlässig gegen ein Verdrehen oder Lösen der Wendeschneidplatte während des Arbeitprozesses sein.

Der erfindungsgemäße Klemmhalter für Mittelloch-Wendeplatten ist dadurch gekennzeichnet, daß sich an den Ringbund der Hülse ein in Draufsicht etwa halbkreisförmiger Hülsenfortsatz anschließt, der innerhalb der gelochten Wendeschneidplatte in den der Schneide benachbarten Bereich hineinragt und eine etwa torisch gekrümmte Innenfläche aufweist, an welcher der als Kugel oder Kegelstumpf ausgebildete Kopfteil des Klemmelementes in zwei Punkten anliegt, die mit der Achse des Klemmelementes einen Winkel von etwa 120° einschließen. Der Hülsenfortsatz mit torisch gekrümmter Innenfläche ist naheliegenderweise symmetrisch zu einer Ebene ausgebildet, wobei die Ebene durch die Hülsenachse und die Normale zur seitlichen Anlagefläche der Wendeschneidplatte an die Schaftausnehmung gebildet wird.

Die Erfindung wird an Hand der Figuren näher erläutert.

Figur 1 zeigt eine bevorzugte Ausführungsform des erfindungsgemäßen Klemmhalters als Schnitt längs dessen Symmetrieebene. Die dargestellte Ausführung des Klemmhalters ist für die Aufnahme negativer Wendeschneidplatten mit quadratischer Grundfläche geeignet.

Figur 2 zeigt einen vergrößerten Ausschnitt des Klemmorganes des obigen Klemmhalters im Bereich des Mittelloches der Wendeschneidplatte als Schnitt längs der Achse A—A' in Figur 1. Die Schnittebene ist so gewählt, daß die Anlagepunkte des Kopfteiles an der Innenfläche des Hülsenfortsatzes in dieser Ebene liegen.

Figur 3 zeigt eine für positive Wendeschneidplatten geeignete Ausführung des erfinderischen Werkzeughalters, ebenfalls als Schnitt entsprechend Figur 1.

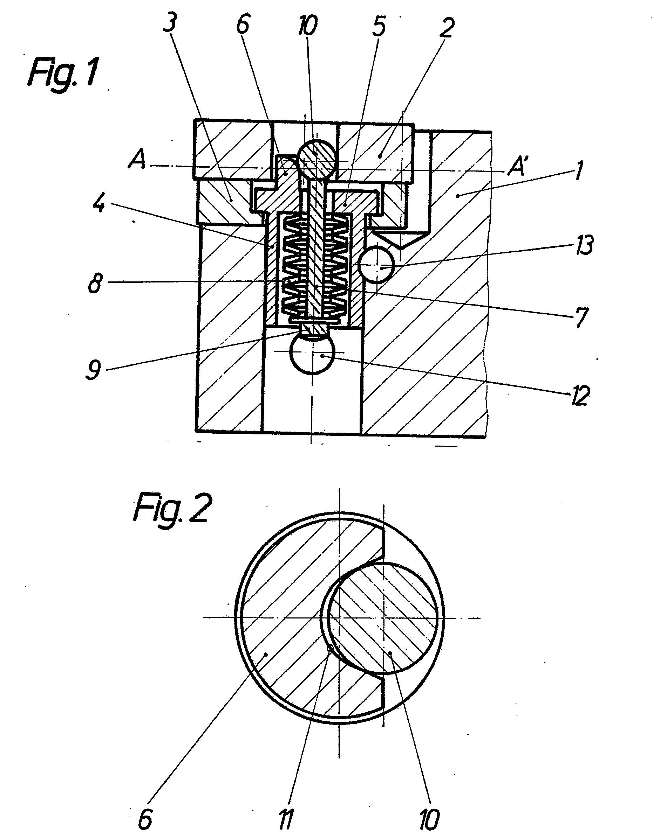

Der erfindungsgemäße Klemmhalter weist einen Werkzeugschaft -1-, eine Mittelloch-Wendeschneidplatte -2- nebst einer darunterliegenden Unterlagsplatte -3- auf. Das Mittelloch-Klemmsystem besteht aus einer mit Paßsitz in eine Schaftbohrung unter der Wendeschneidplatte eingelassenen Hülse -4-. Die Hülse ist durch einen Stift -13- gegen Verdrehen gesichert. Die Hülse besitzt einen deckelartigen Hülsenabschluß -5- mit seitlichem Ringbund. Mit diesem Ringbund wird die Unterlagsplatte arretiert. Der vom Hülsenabschluß ausgehende Hülsenfortsatz -6- reicht in den unteren Bereich des Mittelloches der Wendeschneidplatte hinein. Das mit Tellerfedern -8- ausgestaltete Klemmorgan setzt sich aus einem durch den Hülsenabschluß hindurchgeführten Stift -7-, einem als Widerlager für Tellerfedern dienenden Endstück -9-, zum Beispiel einer Sicherungsscheibe, sowie einem Kopfteil -10- zusammen. Der Kopfteil kann, wie in der Figur 1 ausgeführt, kugelförmig sein. Er kann aber auch die Gestalt eines Kegelstumpfes oder Birnenform aufweisen.

Das Auswechseln und die Klemmung der Wendeschneidplatte wird wie folgt gehandhabt: Das eine Ende eines Exzenterschlüssels wird über eine seitliche Öffnung -12- in die Schaftbohrung unter die Hülse des Klemmelementes geführt. Durch Drehen des Exzenterschlüssels um eine halbe Drehung wird das Klemmelement angehoben. Die Anlage des Kopfteiles an die Mittellochwandung wird gelöst, und die Wendeschneidplatte kann abgehoben werden. Durch Drehen des Exzenterschlüssels um eine weitere Halbdrehung wird das Klemmelement durch Federkraft abgesenkt und die Wendeschneidplatte wieder geklemmt. Infolge der spezifischen Gestaltung der Innenfläche -11- des Hülsenfortsatzes wird der Kugelkopf des Klemmelementes beim Absenken stets längs zweier, bezüglich Kugelmittelpunkt etwa im Winkel von 120° zueinanderstehender Berührungspunkte entlang der Innenfläche des Hülsenfortsatzes geführt, so daß die Berührung des Kugelkopfes mit der Innenwandung des Mittelloches an der vorausbestimmten Stelle erfolgt. Ein leichtes Kippen des Klemmelementes in Richtung Innenfläche des Hülsenfortsatzes läßt sich während des Anhebens dadurch zuverlässig erreichen, daß die seitlichen Anlageflächen der Tellerfedern, nämlich der Hülsenabschluß und die Sicherungsscheibe des Klemmelementes, in Klemmstellung nicht parallel zueinander liegen, sondern einen entsprechenden Winkel bilden. Es ist bei der Ausgestaltung der Innenfläche des Hülsenfortsatzes darauf zu achten, daß die Tangente am Berührungspunkt des Kugelkopfes mit der Hülsenfortsatzinnenfläche und die Achse des Mittelloches im Klemmzustand einen spitzen Winkel von vorzugsweise etwa 20° einschließen. Dadurch ist sowohl eine gute Kraftschlüssigkeit der Wendeschneidplatte mit den Seitenwänden der Schaftausnehmung als auch mit der Unterlagsplatte gewährleistet.

Um eine Hülse gleichbleibender Wandstärke verwenden zu können, muß vom Hülsenfortsatz aus gesehen die Mittellochachse vor der Achse der Schaftbohrung liegen.

Figur 2 veranschaulicht das Profil der zur Stützung des Kopfteiles dienenden Innenfläche des Hülsenfortsatzes. Das etwa parabelförmige Schnittprofil im Bereich der Innenfläche zwischen den Anlagepunkten des Kopfteiles ist in weiten Höhenbereichen unverändert. Der Krümmungsscheitel des Profiles bewegt sich mit der Höhenänderung auf einer gekrümmten Kurve, die dem Schnittbild der Figur 1 zu entnehmen ist.

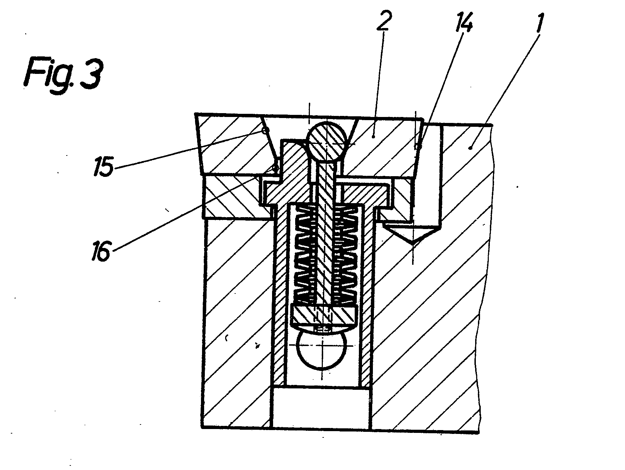

Im Unterschied zu Figur 1 zeigt die Figur 3 eine Ausführung des erfinderischen Klemmhalters für positive Wendeschneidplatten -14-. Zur Erzielung einer guten Kraftschlüssigkeit zwischen Wendeschneidplatte und Shaft ist die Mittellochbohrung der Wendeschneidplatte in ihrem oberen, für die Anlage des Kugelkopfes des Klemmelementes vorgesehenen Teil -15- konisch ausgeführt. Der untere Teil -16- der Mittellochbohrung der Wendeschneidplatte wird günstigerweise zylindrisch ausgeführt, um die Mittellochplatte auch in herkömmlichen Haltersystemen verwenden zu können. Die Ausführung des erfinderischen Klemmhalters gemäß Figur 3 unterscheidet sich weiterhin dadurch von der Ausführung gemäß Figur 1, daß die Hülse über die eigentlichen Klemmelemente hinaus nach unten forgesetzt ist und daß der Exzenterschlüssel zum Lösen des Klemmsystemes über ein Loch in der Hülse seitlich eingeführt wird.

Der erfindeische Klemmhalter zeichnet sich durch einfache Bauelemente aus. Das Klemmorgan läßt sich daher vorteilhafterweise als Ganzes schnell und kostengünstig austauschen. Die geringe Bauhöhe öffnet weite Anwendungsbereiche, zum Beispiel für Innenbearbeitung von Werkstücken.

Dadurch, daß die bei der Klemmung wirksam werdenden Anlage-bzw. Abstützpunkte allein in einem kleinen Bereich innerhalb des Wendeplatten-Mittelloches liegen, ausgenommen die Anlage der Wendeschneidplatte am Schaft, werden die eingangs geschilderten Unzuläng-lichkeiten bekannter Klemmhalter mit Mit-tellochklemmung, insbesondere was die Aus-wirkungen von Dimensionstoleranzen anbe-langt, ausgeschaltet.

Der Sitz der Platten im Klemmhalter ist bedienungsunabhängig stets gleich gut. Es kommt beim Drehen weder zu dem gefürchteten Rattern noch zum Klettern der Wendeschneidplatte. Die Kraftschlüssigkeit zwischen Wendeschneidplatte und Klemmhalterschaft ist selbst in den Fällen voll befriedigend, in denen die Kräfte vom Werkstück auf die Wendeschneidplatte aus weit von der Idealrichtung, nämlich der Resultierenden der Normalen zu den Analgeflächen, abweichenden Richtungen zu übertragen sind. Das erfinderische Klemm-haltersystem ist daher für das Koppierdrehen geeignet.

Das erfinderische Klemmhaltersystem eignet sich zur Aufnahme quadratischer, aber auch rhombischer und dreieckiger Wendeschneidplatten.

Infolge der Führung des Kugelkopfes in der Innenfläche des Hülsenfortsatzes ist selbst für dreieckige Wendeschneidplatten mit einseitiger Anlage eine exakte Positionierung und Arretierung gewährleistet.

Der erfinderische Klemmhalter ist zur Aufnahme aller üblicherweise verwendeten Wendeschneidplattengrößen geeignet. Die untere Grenze, ab der das erfinderische Klemmsystem für eine Herstellung zu filigran und damit zu teuer wird, ist damit nicht von praktischer Bedeutung.

Der erfinderische Klemmhalter läßt sich sowohl in Drehwerkzeugen als auch in Fräswerkzeugen verwenden.

Das Wechseln der Wendeschneidplatte ist technisch und bedienungsmäßig besonders einfach und zuverlässig zu handhaben. Es eröffnet sich daher die Möglichkeit, dieses Klemmsystem in Einrichtungen zur automatischen Plattenwechslung zu integrieren. Das Anheben des Klemmelementes für das Wechseln der Wendeschneidplatten könnte dabei von unten durch die Schaftbohrung erfolgen.

## Patentansprüche

1. Werkzeug-Klemmhalter, welcher einen Schaft mit einer Ausnehmung zur Auflage einer gelochten Unterlagsplatte und einer gelochten Wendeschneidplatte sowie eine Klemmeinrichtung aufweist, die eine in einer Schaftbohrung unter der Ausnehmung befestigte zylindrische Hülse mit einem Ringbund an ihrem oberen Ende sowie ein Klemmelement umfaßt, das mit seinem Fußteil in die Hülse und mit seinem Kopfteil durch die Unterlagsplatte hindurch in das Loch der Wendeschneidplatte hineinragt und dort abgestützt ist und das in der Hülse mittels Tellerfedern gehalten und gegen Federkraft in Achsrichtung bewegbar ist, dadurch gekennzeichnet, daß sich an den Ringbund (5) der Hülse (4) ein in Draufsicht etwa halbkreisförmiger Hülsenfortsatz (6) anschließt, der innerhalb der gelochten Wendes-schneidplatte (2) in den der Schneide benachbarten Bereich hineinragt und eine etwa torisch gekrümmet Innenfläche (11) aufweist, an welcher der als Kugel oder Kegelstumpf ausgebildete Kopfteil (10) des Klemmelementes (7) in zwei Punkten anliegt, die mit der Achse des Klemmelementes (7) einen Winkel von etwa 120° einschließen.

2. Klemmhalter nach Anspruch 1, dadurch gekennzeichnet, daß die Tangente durch jeden der beiden Berührungspunkte auf der Innenfläche des Hülsenfortsatzes (6) mit der Achse der Schaftbohrung einen spitzen Winkel von vorzugsweise 20° einschließt.

3. Klemmhalter nach Anspruch 1 oder 2, dadurch gekennzeichnet, daß die Achse des Loches der Wendeschneidplatte (2) gegenüber der Achse der Schaftbohrung in an sich bekannter Weise in Richtung zur Schneidplatte versetzt ist.

## Revendications

1. Porte-outil à serrage, qui comporte un arbre avec un évidement destiné à supporter une plaque d'assise munie d'un perçage et une plaque amovible munie d'un perçage ainsi qu'un dispositif de serrage qui comprend un manchon cylindrique, fixé dans un perçage de l'arbre au-dessous de l'évidement at comportant un épaulement annulaire à son extrémité supérieure, ainsi qu'un élément de serrage dont la partie inférieure ou pied s'engage dans le manchon et dont la partie supérieure ou tête s'engage, en traversant la plaque d'assise, dans le perçage de la plaque amovible et y est appuyée, et qui est maintenu dans le manchon au moyen de ressorts Belleville et peut être déplacé suivant la direction axiale à l'encontre des ressorts, caractérisé en ce qu'à l'épaulement annulaire (5) du manchon (4) se raccorde un prolongement (6) du manchon, de forme sensiblement semi-circulaire en vue en plan, qui pénètre à l'intérieur de la plaque amovible (2) comportant un perçage dans la région voisine de l'outil tranchant et possède une face intérieure (11) incurvée sensiblement toriquement sur laquelle la tête (10) de l'élément de serrage (7), se présentant sous la forme d'une sphère ou d'un tronc de cône, s'appuie en deux points qui définissent un angle d'environ 120° avec l'axe de l'élément de serrage (7).

2. Porte-outil à serrage suivant la revendication 1, caractérisé en ce que les tangentes passant par chacun des deux points de contact sur la face intérieure du prolongement (6) du manchon forment un angle aigu,

égal de préférence à 20°, avec l'axe du perçage de l'arbre.

3. Porte-outil à serrage suivant l'une des revendications 1 ou 2, caractérisé en ce que l'axe du perçage de la plaque amovible (2) est décalé, de façon connue en soi, en direction de la plaque de coupe, par rapport à l'axe du perçage de l'arbre.

## Claims

1. Clamping toolholder, comprising a shank with a recess for the support of a base plate with central boring, an indexable insert with a central hole and clamping means, said the clamping means comprising a cylindrical bushing, which is fixed in a shankbore below said recess, including a ringflange at its upper end and a clamping element, having a lower part extending into the bushing and a head part extending through the base plate into the insert hold and adjoining itself to the wall of the hole, so that the clamping element is supported within the bushing by plate springs and movable in the direction of the axis thereof, guided by spring forces, characterized in, that there is a prolongation (6) of in top view approximately semicircular shape, beginning at said ringflange (5) of the bushing (4) and extending upwardly to be in the central hole of the indexable insert (2) in its area adjacent to the cutting edge and that the prolongation in its inner surface area (11) has toroidal shape to permit the head part (10) of the clamping element (7) of the shape of a ball or a truncated cone to adjoin itself to the prolongation at two points, which include an angle of 120° with the axis of the clamping element (7).

2. Clamping toolholder, according to claim 1, wherein the angle between the tangential plane of the inner surface of the prolongation (6) in its two adjoining points and the axis of the clamping element is acute, preferably 20°.

3. Clamping toolholder, according to claim 1 or 2, wherein in a known manner the axis of the hole of the indexable insert (2) is displaced with respect to the axis of the shank boring in direction to the indexable insert.

Fig. 1

Fig. 2

Fig. 3